# EUROPEAN PATENT APPLICATION

(11) **EP 4 485 410 A1**
(43) Date of publication of application: **01.01.2025**
(21) Application number: 23770729.4
(22) Date of filing: 13.03.2023
(51) Int. Cl.: G07D 11/20

(54) **CURRENCY PROCESSING DEVICE**

(30) Priority: 17.03.2022 JP 2022042047
(71) Applicant: GLORY LTD., Himeji-shi Hyogo 670-8567 (JP)
(72) Inventor: KAJITA, Shoji, Himeji-shi, Hyogo 670-8567 (JP); TAKATA, Hideki, Himeji-shi, Hyogo 670-8567 (JP)
(74) Representative: SSM Sandmair
(86) International application number: PCT/JP2023/009617
(87) International publication number: WO 2023/176774

(57) **Abstract**

A money handling apparatus (1000) includes: an input unit (1001); a depositing unit (1002) that feeds out money to be deposited, into the apparatus; a transport unit (1003) that transports the money fed out from the depositing unit; a recognition unit (1004) that recognizes the money and outputs a recognition signal; a first storage unit (1005) and a second storage unit (1006) configured to store recognized money; and a controller (1007) that outputs a control signal so that money to be digitized is stored in the first storage unit and money not to be digitized is stored in the second storage unit, in a depositing process, based on at least an operation signal.

## Description

### TECHNICAL FIELD

The technology disclosed herein relates to a money handling apparatus.

### BACKGROUND ART

A technology in which a device connected to a cash grid, e.g., an automatic teller machine (ATM), converts physical cash into digital currency, has been known (Patent Literature 1). The digital currency is managed in the cash grid. It is also known that such a device invalidates the physical cash converted into the digital currency by cutting, for example.

A system described in Patent Literature 2 also converts physical currency into digital currency. A user can convert physical currency into digital currency by providing the physical currency to an ATM, for example. The physical currency converted into the digital currency is removed from circulation by a central bank.

Meanwhile, a technology for safely transporting physical cash has been known (Patent Literature 3). Specifically, Patent Literature 3 discloses a procedure as follows.

Firstly, a first cash handling machine takes photographs of cash being transported, and transmits the photographs to a second cash handling machine. Next, the first cash handling machine cuts, for example, the letters "INVALID", from the cash by using a laser cutter, thereby invalidating the physical cash. The invalidated cash is transported to the second cash handling machine. Since the cash is invalidated, the cash can be safely transported. The second cash handling machine takes the invalidated cash therein, and converts the invalidated cash into digital currency. The digital currency is managed by a block chain, for example. Moreover, the second cash handling machine completely destroys the invalidated cash by using a shredder, for example.

### CITATION LIST

### [PATENT LITERATURE]

[PTL 1] U.S. Patent No. 10783501
[PTL 2] U.S. Patent Application Publication No. 2020/151682
[PTL 3] U.S. Patent Application Publication No. 2020/160331

### SUMMARY OF THE INVENTION

### PROBLEMS TO BE SOLVED BY THE INVENTION

The conventional devices handle both the money(cash, currency) to be converted into digital currency and the money not to be converted into digital currency, but, unfortunately, cannot manage them separately.

The technology disclosed herein manages money(cash, currency) to be converted into digital currency separately from money not to be converted into digital currency.

### SOLUTION TO THE PROBLEMS

The technology disclosed herein relates to a money handling apparatus. The money handling apparatus includes: an input unit configured to output an operation signal corresponding to an operation performed by a user; a depositing unit configured to send out money to be deposited, into the apparatus; a transport unit having a transport path connected to the depositing unit, and configured to transport the money sent out from the depositing unit; a recognition unit disposed on the transport path, and configured to recognize the money and output a recognition signal; a first storage unit and a second storage unit to which the transport path is connected, and which are configured to store recognized money; and a controller configured to output a control signal so that, in a depositing process, money to be digitized is stored in the first storage unit and money not to be digitized is stored in the second storage unit, based on at least the operation signal.

Since the money to be digitized and the money not to be digitized are stored in different storage units, the money handling apparatus can manage them separately.

The operation signal may be a signal regarding whether conversion into digital currency is necessary in the depositing process. The signal regarding whether conversion into digital currency is necessary may be the type of the depositing process. The depositing process may include a first depositing process and a second depositing process. The first depositing process is a process in which a part or all of the physical money inserted in the depositing unit is converted into digital currency and the digital currency is deposited. The second depositing process is a process in which the physical money inserted in the depositing unit is deposited without being converted into digital currency. The signal regarding whether conversion into digital currency is necessary may be the kind of money required to be converted into digital currency. The kind of money is denomination of money, for example. The money to be digitized means money that is converted into digital currency or money to be converted into digital currency in the depositing process.

The money handling apparatus may further include an invalidation unit connected to the first storage unit, and configured to invalidate the money to be digitized. The first storage unit may store invalidated money.

The money to be digitized stored in the first storage unit is unusable money. The money handling apparatus can safely manage money.

The first storage unit may be mountable/dismountable with respect to the apparatus.

An operator can dismount the first storage unit from the apparatus and collect the money to be digitized.

The money handling apparatus may further include a dispensing unit to which the transport path is connected, and which is configured to dispense, from the apparatus, money to be dispensed that has been fed out from the second storage unit in a dispensing process.

Since the second storage unit stores the physical money that is not digitized, the money handling apparatus can provide the user with this money in the dispensing process.

The transport unit may include a diverter located in a section, of the transport path, from the recognition unit toward the second storage unit, and a branching transport path branching off from the transport path at the diverter. The first storage unit may be connected to the branching transport path.

The diverter can distribute the recognized money to the first storage unit and to the second storage unit.

The transport unit may not have another diverter in a section, of the transport path, from the recognition unit toward the diverter.

Jamming of money tends to occur at the diverter. If another diverter is present in the section between the recognition unit and the diverter, the risk of jamming of money increases. Such jamming at the diverter or the other diverter may result in a risk that the money to be digitized and the money not to be digitized are mixed up when the operator performs an error clearing operation to clear the jamming. Absence of another diverter in the section between the recognition unit and the diverter reduces the risk of jamming.

The money handling apparatus may further include a first temporary storage unit configured to temporarily store the money to be digitized before being stored in the first storage unit.

After taking the money to be deposited therein, the money handling apparatus, upon receiving a confirmation operation of the user, can store only the money to be digitized stored in the first temporary storage unit, into the first storage unit, thereby preventing the money to be digitized from being mixed with the money not to be digitized. Moreover, if the user cancels digitization of money after the money to be deposited is taken into the money handling apparatus, the money handling apparatus can return only the money to be digitized stored in the first temporary storage unit, thereby avoiding mixing with the money not to be digitized.

The transport unit may include a diverter located in a section, of the transport path, from the recognition unit toward the second storage unit, and a branching transport path branching off from the diverter, and the first temporary storage unit and the first storage unit may be connected to the branching transport path.

The transport unit transports only the money to be digitized along the branching transport path.

The money handling apparatus may further include a second temporary storage unit configured to temporarily store the money not to be digitized before being stored in the second storage unit.

The money handling apparatus can temporarily store the money to be digitized and the money not to be digitized, separately in two temporary storage units, respectively. When the money handling apparatus transfers the money stored in the temporary storage unit to the storage unit upon receiving the confirmation operation, the money to be digitized and the money not to be digitized can be handled without being mixed. In addition, when the money handling apparatus returns the money stored in the temporary storage unit upon receiving the cancelation, the money to be digitized and the money not to be digitized can be handled without being mixed.

The diverter may be located in a section, of the transport path, from the recognition unit toward the second temporary storage unit.

The diverter can sort the money to be stored in the first temporary storage unit, and the money to be stored in the second temporary storage unit.

The depositing unit may be located at a front part of the apparatus, and the first temporary storage unit and the second temporary storage unit may be located at a rear part of the apparatus. Furthermore, the input unit may be located at the front part of the apparatus.

The user can easily operate the money handling apparatus. The operator can easily perform maintenance of the money handling apparatus.

The money handling apparatus may further include a first storage section configured to store the first storage unit, and the second storage unit may be located outside the first storage section.

The money handling apparatus can manage the money to be converted into digital currency and the money not to be converted into digital currency so as to be more strictly separated from each other.

The money handling apparatus may further include a second storage section configured to store the second storage unit. The first storage section may have a first open/close door that is lockable, and the second storage section may have a second open/close door that is lockable and different from the first open/close door.

The two open/close doors allow an access authority on the first storage unit that stores the money to be digitized, and an access authority on the second storage unit that stores the money not to be digitized to be different from each other.

The depositing unit may be located at the front part of the apparatus, the first storage unit may be located at the rear part of the apparatus, and the second storage unit may be located at the front part of the apparatus. Furthermore, the input unit may be located at the front part of the apparatus.

The user can easily operate the money handling apparatus. The operator can easily perform maintenance of the money handling apparatus from the front or the rear.

The second storage unit may be housed in a main body of the apparatus, and the first storage unit may be housed in an extension assembly mounted to the main body of the apparatus.

The main body of the money handling apparatus can be retrofitted with the first storage unit. When the first storage unit is mounted to the main body of the apparatus, the money handling apparatus is changed from being non-compatible with digitization to being compatible with digitization. It is easy to make an access authority on the extension assembly in which the first storage unit is housed, and an access authority on the main body of the apparatus in which the second storage unit is housed, different from each other.

### ADVANTAGEOUS EFFECTS OF THE INVENTION

As described above, the aforementioned money handling apparatus can manage money to be converted into digital currency and money not to be converted into digital currency separately from each other.

### BRIEF DESCRIPTION OF THE DRAWINGS

- [FIG. 1] FIG. 1: illustrates a money handling apparatus.
- [FIG. 2] FIG. 2: illustrates a handling procedure of the money handling apparatus.
- [FIG. 3] FIG. 3: illustrates a data structure of digital currency.
- [FIG. 4] FIG. 4: illustrates another money handling apparatus.
- [FIG. 5] FIG. 5: illustrates still another money handling apparatus.
- [FIG. 6] FIG. 6: illustrates yet another money handling apparatus.
- [FIG. 7] FIG. 7: illustrates a further money handling apparatus.
- [FIG. 8] FIG. 8: illustrates a still further money handling apparatus.
- [FIG. 9] FIG. 9: illustrates an exemplary money handling apparatus.

### DESCRIPTION OF EMBODIMENTS

Hereinafter, embodiments of a money handling apparatus will be described with reference to the drawings. The money handling apparatus described here is an example.

### (First embodiment)

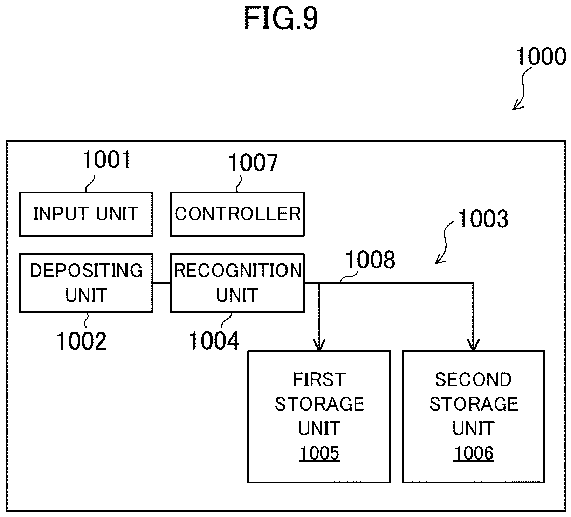

FIG. 9 exemplarily illustrates a money handling apparatus 1000. The money handling apparatus 1000 includes an input unit 1001, a depositing unit 1002, a transport unit 1003, a recognition unit 1004, a first storage unit 1005, a second storage unit 1006, and a controller 1007.

The money handling apparatus 1000 is installed in, for example, a service office of a bank. The installation place of the money handling apparatus 1000 is not limited. The money handling apparatus 1000 performs a money depositing process according to a user's operation. The money handling apparatus 1000 may be a so-called ATM. The money handling apparatus 1000 may be an apparatus that is operated by a teller of a bank. Money is banknotes, coins, or both banknotes and coins. The depositing process is a process in which the money handling apparatus 1000 stores therein physical money to be deposited, and deposits money equivalent in value to the physical money stored in the apparatus, into a bank account. The bank account is an account of the user who performs the depositing process, or an account of another person designated by the user.

The money handling apparatus 1000 further performs a process of converting a part or all of physical money to be deposited into digital currency, and depositing the digital currency into a bank account or a digital wallet. In this case as well, the bank account is an account of the user who performs the depositing process, or an account of another person designated by the user. The digital wallet is a digital wallet of the user who performs the depositing process, or a digital wallet of another person designated by the user. The digital wallet can be implemented by, for example, electronic equipment such as a smartphone, a smartwatch, a tablet, or a computer, and the user can perform settlement by using the electronic equipment. Whether or not conversion into digital currency is necessary depends on an operation signal corresponding to the user's operation.

The input unit 1001 receives the user's operation. In addition, the input unit 1001 outputs, to the controller 1007, the operation signal corresponding to the user's operation. The operation signal includes at least one of: designation of a depositing process; designation of a destination account or digital wallet; whether or not conversion to digital currency is necessary; and designation of the type of the depositing process.

The user inserts physical money to be deposited, into the depositing unit 1002. The depositing unit 1002 sends out the inserted money to be deposited, into the money handling apparatus 1000.

The transport unit 1003 includes a transport path 1008 connected to the depositing unit 1002. The transport unit 1003 transports the money sent out from the depositing unit 1002 along the transport path 1008.

The recognition unit 1004 is located on the transport path 1008. The recognition unit 1004 recognizes the money being transported, and outputs a recognition signal to the controller 1007. The recognition unit 1004 recognizes at least the denomination of the money.

The first storage unit 1005 stores the recognized money. The transport path 1008 is connected to the first storage unit 1005.

The second storage unit 1006 also stores the recognized money. The transport path 1008 is also connected to the second storage unit 1006.

The controller 1007 outputs a control signal to the transport unit 1003. More specifically, in the depositing process, the controller 1007 outputs the control signal to the transport unit 1003 so that, among the money to be deposited, money to be digitized is stored in the first storage unit 1005 and money not to be digitized is stored in the second storage unit 1006. The controller 1007 distinguishes the money to be digitized from the money not to be digitized, based on the operation signal from the input unit 1001. Alternatively, the controller 1007 distinguishes a depositing process accompanied by digitization of money from a depositing process not accompanied by digitization of money, based on the operation signal from the input unit 1001. The transport unit 1003 sorts the money, whereby the money to be digitized is stored in the first storage unit 1005 and the money not to be digitized is stored in the second storage unit 1006. The money handling apparatus 1000 can manage the money to be digitized and the money not to be digitized separately from each other.

### (Second embodiment)

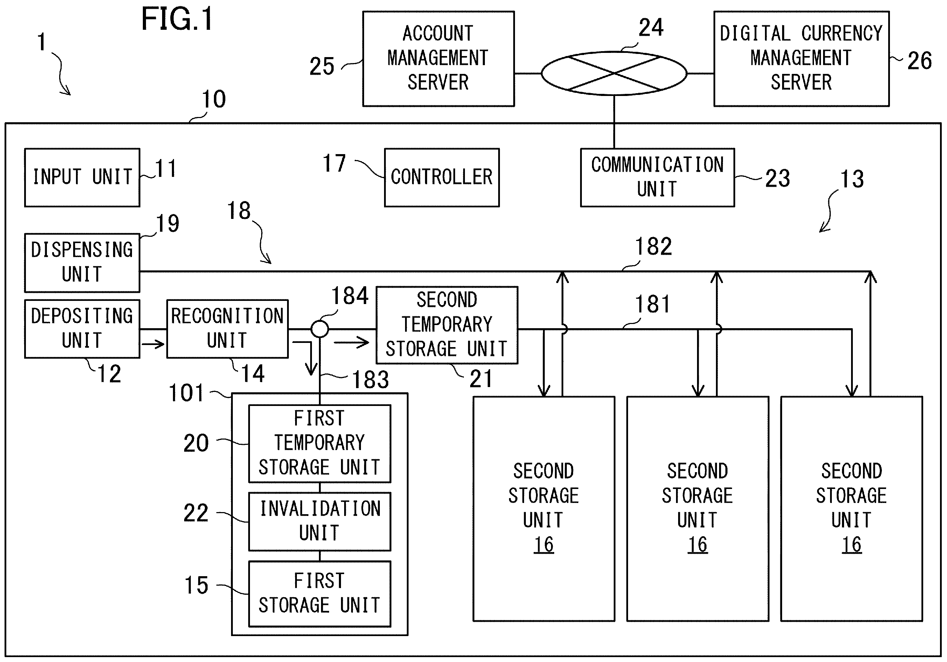

FIG. 1 illustrates a money handling apparatus 1 according to a second embodiment. The money handling apparatus 1 is a modification of the money handling apparatus 1000 shown in FIG. 9. The money handling apparatus 1 includes an input unit 11, a depositing unit 12, a transport unit 13, a recognition unit 14, a first storage unit 15, second storage units 16, and a controller 17. The money handling apparatus 1 further includes a dispensing unit 19, a first temporary storage unit 20, a second temporary storage unit 21, an invalidation unit 22, and a communication unit 23. The transport unit 13, the recognition unit 14, the first storage unit 15, the second storage units 16, the controller 17, the first temporary storage unit 20, the second temporary storage unit 21, the invalidation unit 22, and the communication unit 23 are housed in a housing 10 of the money handling apparatus 1. At least parts of the depositing unit 12 and the dispensing unit 19 are exposed to the outside of the housing 10 so that the user can access them. FIG. 1 only illustrates the connection relationship between the respective components, and may not necessarily illustrate the exact positions of the respective components.

Like the money handling apparatus 1000, the money handling apparatus 1 is installed in, for example, a service office of a bank. The installation place of the money handling apparatus 1 is not limited. The money handling apparatus 1 is also capable of performing a process of converting a part or all of physical money to be deposited into digital currency, and depositing the digital currency into a bank account or a digital wallet, that is, the depositing process.

The input unit 11 is a touch-panel display mounted to the money handling apparatus 1, or an encrypting pin pad (EPP). The user can perform an input operation by using the input unit 11. In this case, at least a part of the input unit 11 is exposed to the outside of the housing 10 so that the user can access the input unit 11. The input unit 11 may be a receiver that receives an input signal transmitted from a mobile device (e.g., smartphone) of the user or an external computer. The input signal is a signal corresponding to the user's input operation. The input unit 11 outputs an operation signal corresponding to the user's operation to the controller 17.

The depositing unit 12 receives physical money. The user inserts physical money to be deposited, into the depositing unit 12. The depositing unit 12 sends out the inserted money to be deposited, into the money handling apparatus 1.

The dispensing unit 19 receives physical money to be dispensed. The physical money to be dispensed is sent out from the money handling apparatus 1 to the dispensing unit 19. The user can manually take out the physical money received by the dispensing unit 19. The money handling apparatus 1 may not necessarily include the dispensing unit 19. The money handling apparatus 1 may be an apparatus that does not perform a dispensing process. The depositing unit 12 and the dispensing unit 19 may be integrated with each other. That is, in the money handling apparatus 1, a part that receives the money to be deposited may be the same as a part that receives the money to be dispensed.

The transport unit 13 has a transport path 18. The transport path 18 includes a forward path 181 that connects the depositing unit 12 to the second storage units 16, and a return path 182 that connects the dispensing unit 19 to the second storage units 16. As described later, the transport unit 13 transports the money to be deposited, which has been sent out from the depositing unit 12, along the forward path 181 to the second storage units 16. Furthermore, the transport unit 13 transports the money to be dispensed, which has been fed out from the second storage unit 16, along the return path 182 to the dispensing unit 19.

The recognition unit 14 is located on the forward path 181. The recognition unit 14 recognizes money, and outputs a recognition signal to the controller 17.

The first storage unit 15 stores the recognized money. The first storage unit 15 cannot feed out the stored money. The first storage unit 15 is detachably mounted to the housing 10. An operator can dismount the first storage unit 15 from the housing 10 and collect the money stored in the first storage unit 15.

The first storage unit 15 is connected to a branching transport path 183 that branches from the forward path 181. A diverter 184 is disposed at a connection point of the forward path 181 and the branching transport path 183. The diverter 184 is positioned between the recognition unit 14 and the second temporary storage unit 21 described later. Upon receiving a control signal from the controller 17, the diverter 184 switches the money transport direction between a first direction and a second direction. The first direction is a direction from the recognition unit 14 toward the second storage units 16 along the forward path 181. The second direction is a direction from the recognition unit 14 toward the first storage unit 15 along the branching transport path 183.

The second storage units 16 also store the recognized money therein. In contrast to the first storage unit 15, the second storage units 16 can feed out the stored money. The second storage units 16 are connected to the forward path 181 and the return path 182. The money handling apparatus 1 includes a plurality of second storage units 16. The plurality of second storage units 16 are connected in parallel with respect to the forward path 181. The recognized money is selectively stored in any of the plurality of second storage units 16. The plurality of second storage units 16 may store the money for each denomination, for example. In addition, the plurality of second storage units 16 are connected in parallel with respect to the return path 182. The money fed out from any second storage unit 16 is transported by the transport unit 13 to the dispensing unit 19 through the return path 182.

The second temporary storage unit 21 is located between the diverter 184 and the second storage units 16. The second temporary storage unit 21 temporarily stores money. The money diverged by the diverter 184 toward the second storage units 16 is firstly stored in the second temporary storage unit 21. The money fed out from the second temporary storage unit 21 is stored in any of the second storage units 16.

The first temporary storage unit 20 is connected to the branching transport path 183. More specifically, the first temporary storage unit 20 is located between the diverter 184 and the first storage unit 15. The first temporary storage unit 20 temporarily stores money. The money diverged by the diverter 184 to the branching transport path 183 is firstly stored in the first temporary storage unit 20. Although details will be described later, the money fed out from the first temporary storage unit 20 is stored in the first storage unit 15.

The invalidation unit 22 has a function of invalidating physical money. The invalidated money cannot be used. Specifically, the invalidation unit 22 is a shredder that shreds money, a puncher that makes holes in money, a cutter that cuts money, a printer that prints on money, or an ink spray that sprays ink onto money. The invalidation unit 22 may be of any type as long as it can invalidate physical money.

The invalidation unit 22 is located between the first temporary storage unit 20 and the first storage unit 15 on the branching transport path 183. The invalidation unit 22 invalidates the money fed out from the first temporary storage unit 20. The first storage unit 15 stores the money invalidated by the invalidation unit 22.

Another diverter may be disposed between the diverter 184 and the second temporary storage unit 21, and a reject transport path connecting this diverter to the return path 182 may be disposed.

Here, the first temporary storage unit 20, the invalidation unit 22, and the first storage unit 15 are stored in a storage section 101 in the housing 10 of the money handling apparatus 1. In the housing 10, the storage section 101 is isolated from the section where the second storage units 16 are located. An operator who can access the inside of the housing 10 has a special authority. An operator who can access the inside of the storage section 101 has another authority.

The communication unit 23 communicates with the outside. The communication unit 23 is connected to a network 24 (e.g., the Internet), and performs communication via the network 24.

An account management server 25 and a digital currency management server 26 are connected to the network 24. The money handling apparatus 1, the account management server 25, and the digital currency management server 26 are communicable with each other via the network 24. The account management server 25 is a server that manages bank accounts. The account management server 25 performs a process of depositing money into an account of a user in accordance with a depositing process in the money handling apparatus 1, as described later. The digital currency management server 26 performs a process of converting physical money into digital currency, based on a request for conversion into digital currency from the money handling apparatus 1, as described later. The digital currency management server 26 is operated by, for example, the central bank.

The controller 17 includes at least a processor, a memory, and an I/F circuit. The processor executes a program. The memory stores programs and data for operating the money handling apparatus 1. The memory is, for example, a random access memory (RAM) and/or a read only memory (ROM). The I/F circuit inputs and outputs an electric signal between the controller 17 and each unit connected to the controller 17.

The controller 17 receives the operation signal from the input unit 11 and the recognition signal from the recognition unit 14, and outputs a control signal to each of the units including the transport unit 13.

### <Procedure of digital depositing process of money handling apparatus>

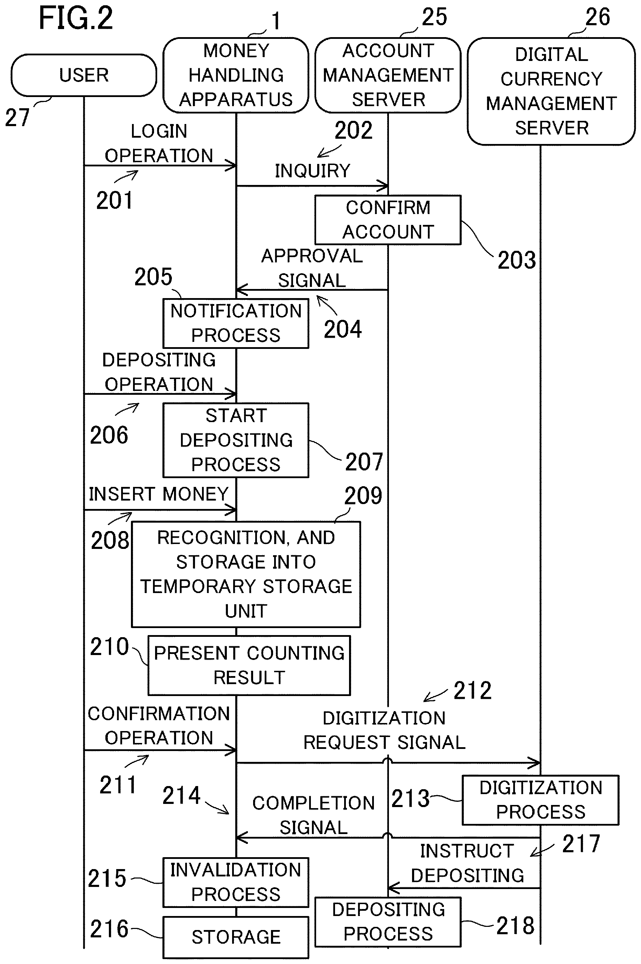

Next, the procedure of the depositing process performed by the money handling apparatus 1 will be described with reference to FIG. 2. As described above, in the depositing process, the money handling apparatus 1 can perform a process of converting a part or all of physical money to be deposited into digital currency, and depositing the digital currency into a bank account. Hereinafter, this process is referred to as a first depositing process, digital depositing, or a digital depositing process. The money handling apparatus 1 can also perform a process of, without converting physical money to be deposited into digital currency, depositing money equivalent in value to the physical money into the bank account. Hereinafter, this process is referred to as a second depositing process, normal depositing, or a normal depositing process. FIG. 2 illustrates the procedure of the depositing process, taking as an example a case where the user digitally deposits all the money to be deposited into his/her own bank account. The procedure is substantially the same even if the user digitally deposits a part of the money to be deposited into his/her own bank account, or the user digitally deposits a part or all of the money to be deposited into a bank account of another person (so-called transfer). Furthermore, even if the destination of depositing is a digital wallet, the procedure is substantially the same.

Firstly, a user 27 performs a login operation through the input unit 11 (201). Information inputted through the login operation includes information on an account number and a password. The input unit 11 outputs, to the controller 17, an operation signal including the password inputted through the login operation. The money handling apparatus 1 makes an inquiry to the account management server 25 via the network 24 (202). Specifically, the controller 17 outputs a control signal to the communication unit 23, and causes the communication unit 23 to transmit an inquiry signal to the account management server 25 via the network 24. The inquiry signal includes the information on the account number and the password outputted from the input unit 11. The account management server 25 confirms the account of the user 27 (203). If the account confirmation is successful, the account management server 25 transmits an approval signal for the user 27 to the money handling apparatus 1 (204).

Upon receiving the approval signal, the money handling apparatus 1 performs a notification process of notifying the user 27 that a depositing process is allowed (205). The user 27 performs a depositing operation through the input unit 11 (206). Information inputted through the depositing operation includes at least information on "depositing process execution request". The information inputted through the depositing operation may include information on "type of the depositing process" or "whether or not conversion into digital currency is necessary". Furthermore, the information inputted through the depositing operation may include at least one piece of information among "amount to be converted into digital currency", "denomination to be converted into digital currency", and "quantity of money to be converted into digital currency". The user may convert all the money to be deposited into digital currency, or may convert a part of the money into digital currency. The input unit 11 outputs an operation signal including these pieces of information to the controller 17.

The controller 17 of the money handling apparatus 1 starts the depositing process, based on the operation signal (207). Specifically, the user 27 inserts physical money to be deposited, into the depositing unit 12 (208), and the recognition unit 14 recognizes the money sent out from the depositing unit 12 into the apparatus, one by one. The recognition unit 14 recognizes at least the denomination of the money. The recognition unit 14 may further recognize at least one of authenticity, version, and fitness of the money. If the money is a banknote, the recognition unit 14 reads an identification number, e.g., a serial number, of the banknote. The recognition unit 14 may take an image of the money. The controller 17 of the money handling apparatus 1 sorts the recognized money, based on the operation signal. The controller 17 may sort the recognized money, based on the operation signal and the recognition signal from the recognition unit 14. Specifically, the controller 17 outputs the control signal to the transport unit 13 so that money to be digitized is stored in the first storage unit 15 and money not to be digitized is stored in the second storage unit 16. The transport unit 13 transports the money not to be digitized in the first direction so as to be directed to the second storage units 16, and transports the money to be digitized in the second direction so as to be directed to the first storage unit 15, based on the control signal from the controller 17, by using the diverter 184 (see arrows in FIG. 1). The money not to be digitized is stored in the second temporary storage unit 21, and the money to be digitized is stored in the first temporary storage unit 20 (209). The money handling apparatus 1 may transport money, which cannot be accepted by the money handling apparatus 1 according to the result of the recognition by the recognition unit 14, to the dispensing unit 19 through the reject transport path, for example, so as to be returned to the user.

When the depositing unit 12 has sent out all the money to be deposited and the recognition unit 14 has recognized all the money, the money handling apparatus 1 presents the user with a counting result of the money taken into the apparatus (210). The user confirms the counting result and performs a confirmation operation through the input unit 11 (211), and the input unit 11 outputs a confirmation signal as an operation signal to the controller 17.

Upon receiving the confirmation signal, the controller 17 of the money handling apparatus 1 outputs a request signal for converting the physical money to be digitized into digital currency (digitization request signal) to the digital currency management server 26 through the network 24 (212). The request signal includes information on the denomination of the money to be digitized. The request signal may include a deposited money ID that identifies the money to be digitized. If the money is a banknote, the deposited money ID is an identification number that is read by the recognition unit 14. If the money is a coin, the deposited money ID is an ID that is generated by the money handling apparatus 1 and is unique for each denomination. The request signal may include recognition data, other than denomination, relating to the money to be digitized. The recognition data is at least one of version, fitness, and/or captured image of the money. The request signal from the money handling apparatus 1 to the digital currency management server 26 may include a request for depositing the converted digital currency into the account of the user, as described later. This request signal corresponds to a depositing signal that the controller 17 of the money handling apparatus 1 outputs. The request signal may also include information that specifies the user who has performed the digital depositing process (i.e., user ID), and information that specifies an account in which the digital currency is to be deposited (i.e., account ID). In addition, the request signal may include information that specifies the money handling apparatus 1 (i.e., money handling apparatus ID).

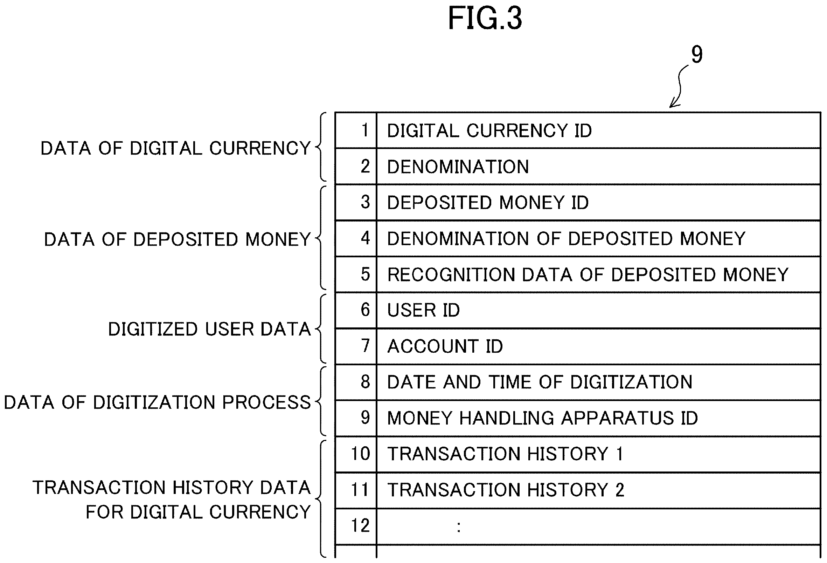

Upon receiving the digitization request signal, the digital currency management server 26 performs a digitization process (213). Specifically, the digital currency management server 26 creates data of digital currency. FIG. 3 exemplarily illustrates a data structure 9 of digital currency. The data of digital currency includes a digital currency ID assigned to the digital currency, and information on the denomination. Information on the physical money before conversion into the digital currency, i.e., information on the deposited money, may be included in the data of digital currency. This information is information transmitted from the money handling apparatus 1 to the digital currency management server 26, and is information on the deposited money ID that identifies the money, the denomination, and the recognition data, for example. The data of digital currency may include the user ID that has performed the digital depositing process, and the account ID that identifies the account to which the digital currency is to be deposited. Moreover, the data of digital currency may include the date and time of digitization, and the money handling apparatus ID. In addition, the data of digital currency may include information on transaction history of the digital currency after the digitization. The transaction history is added to the data of digital currency each time a transaction of the digital currency is performed. The transaction history includes an ID that identifies the transaction person, the transaction history, the transaction content, and information that specifies the used handling apparatus or application. In the data of digital currency, link information for accessing the aforementioned pieces of data may be included instead of including the pieces of data as they are. The digital currency management server 26 may manage the generated digital currency by using a block chain, for example.

Upon completing the digitization process, the digital currency management server 26 transmits a completion signal to the money handling apparatus 1 via the network 24 (214). Upon receiving the completion signal, the money handling apparatus 1 performs an invalidation process. The invalidation process is a process of invalidating, with the invalidation unit 22, the physical money converted into the digital currency. Specifically, the first temporary storage unit 20 feeds out the stored money, and the invalidation unit 22 invalidates the money (215). Then, the first storage unit 15 stores the invalidated money (216).

The digital currency management server 26 performs a depositing instruction to the account management server 25 via the network 24 (217). The account management server 25 performs a process of depositing the digitized money into the account of the user 27 (218). Thus, the digital depositing process is completed.

After the confirmation operation of the user 27, the second temporary storage unit 21 feeds out the money not to be digitized, and the transport unit 13 transports the money not to be digitized to any of the second storage units 16.

As described above, the money handling apparatus 1 stores the money to be digitized into the first storage unit 15, and stores the money not to be digitized into any of the second storage units 16. The money handling apparatus 1 can manage the money to be digitized and the money not to be digitized separately from each other.

The invalidation unit 22 invalidates the money to be digitized before the money is stored in the first storage unit 15. The money stored in the first storage unit 15 is unusable money. The money handling apparatus 1 can safely manage the money.

Since the first storage unit 15 is mountable/dismountable with respect to the apparatus, the operator can dismount the first storage unit 15 from the apparatus and collect the invalidated money. The operator can easily perform the collection work.

The second storage unit 16 can store and feed out money. The second storage unit 16 is a so-called recycling storage unit. The second storage units 16 can store the money not to be digitized, in other words, the physical money that is not invalidated. The money handling apparatus 1 can provide the user with the physical money that has been fed out from the second storage unit 16 and is not digitized, through the dispensing unit 19.

As shown in FIG. 1, the diverter 184 is located downstream of the recognition unit 14 on the forward path 181. There is no other diverter on the forward path 181 between the recognition unit 14 and the diverter 184.

Jamming of money tends to occur at a diverter. If another diverter is present on the transport path between the recognition unit 14 and the diverter 184, the risk of jamming between the recognition unit 14 and the diverter 184 increases. If jamming occurs between the recognition unit 14 and the diverter 184, the money to be digitized and the money not to be digitized may be mixed up when the operator performs an error clearing operation to clear the jamming. This makes the work of sorting the money to be digitized and the money not to be digitized complicated. Absence of another diverter on the forward path 181 between the recognition unit 14 and the diverter 184 reduces the risk of jamming. Thus, the risk of mixing the money to be digitized and the money not to be digitized is reduced.

Since the money handling apparatus 1 includes the first temporary storage unit 20, the money handling apparatus 1 can invalidate the money to be digitized that is temporarily stored in the first temporary storage unit 20, and store the invalidated money into the first storage unit 15, after the user has performed the confirmation operation. The money handling apparatus 1 can appropriately perform the invalidation process. In addition, if the depositing process accompanied by digitization is canceled, only the money to be digitized can be returned from the first temporary storage unit 20, thereby reducing the risk that the money to be digitized and the money not to be digitized are mixed up.

Since the first temporary storage unit 20 is connected to the branching transport path 183, only the money to be digitized is transported along the branching transport path 183. The money handling apparatus 1 can appropriately manage the money to be digitized.

Since the money handling apparatus 1 further includes the second temporary storage unit 21, the money handling apparatus 1 can temporarily store the money to be digitized and the money not to be digitized, separately in the two temporary storage units 20 and 21, respectively. If the depositing process not accompanied by digitization is canceled, only the money not to be digitized can be returned from the second temporary storage unit 21, thereby reducing the risk that the money to be digitized and the money not to be digitized are mixed up.

Since the diverter 184 is located on the forward path 181 between the recognition unit 14 and the second temporary storage unit 21, the diverter 184 can sort the money to be stored in the first temporary storage unit 20 and the money to be stored in the second temporary storage unit 21.

The first storage unit 15, the first temporary storage unit 20, and the invalidation unit 22 are stored in the storage section 101, and the second storage units 16 are located outside the storage section 101. The money handling apparatus 1 can manage the money to be converted into digital currency and the money not to be converted into digital currency so as to be more strictly separated from each other.

### (Third embodiment)

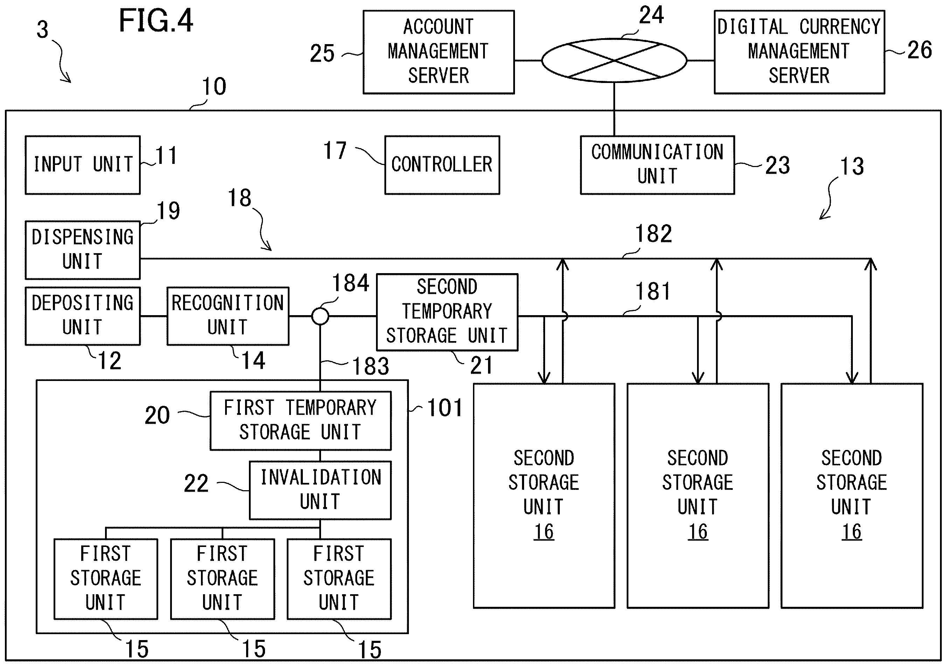

FIG. 4 illustrates a money handling apparatus 3 according to a third embodiment. The money handling apparatus 3 is a modification of the money handling apparatus 1000 shown in FIG. 9, and is a modification of the money handling apparatus 1 shown in FIG. 1. The money handling apparatus 3 includes a plurality of first storage units 15. The plurality of first storage units 15 are connected in parallel with respect to the invalidation unit 22. The first storage units 15 may not necessarily be a plurality of independent storage units, and may be a plurality of storage regions into which an interior of a single storage unit is divided.

Money invalidated by the invalidation unit 22 is selectively stored in any of the plurality of first storage units 15. The plurality of first storage units 15 can store the invalidated money for each kind.

The invalidated money collected from the money handling apparatus 3 is discarded or recycled. Meanwhile, money of different denominations may be made of different materials. It is difficult to discard or recycle money if money of different materials are mixed up.

The money handling apparatus 1 may sort the invalidated money according to the material of the money, for example.

Specifically, if the invalidated money is coins, the money handling apparatus 1 may sort the coins into two or more kinds based on the material such as aluminum, brass, bronze, cupronickel, nickel brass, bicolor clad, silver, and others, and may store the invalidated money into the plurality of first storage units 15 for each kind.

If the invalidated money is banknotes, the money handling apparatus 1 may sort the banknotes into paper, polymer, and a mixture (laminate) thereof, and may store the invalidated money into the plurality of first storage units 15 for each kind. Moreover, banknotes may be sorted based on presence/absence of threads (i.e., metal lines), presence/absence of holograms, or the type of ink used for printing.

Instead of or in addition to being sorted by material, money may be sorted based on the degree of stain. For example, coins may be sorted based on the degree of stain due to rust.

### (Fourth embodiment)

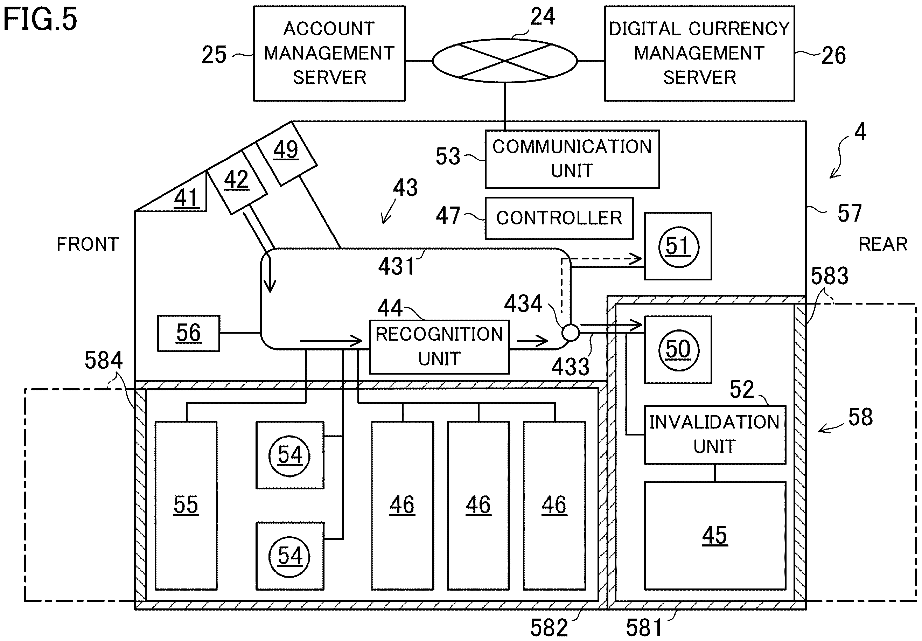

FIG. 5 illustrates a money handling apparatus 4 according to a fourth embodiment. The money handling apparatus 4 is a modification of any of the money handling apparatus 1000 shown in FIG. 9, the money handling apparatus 1 shown in FIG. 1, and the money handling apparatus 3 shown in FIG. 4. The money handling apparatus 4 is a banknote handling apparatus that handles banknotes.

The money handling apparatus 4 includes an input unit 41, a depositing unit 42, a transport unit 43, a recognition unit 44, a first storage unit 45, second storage units 46, a controller 47, a dispensing unit 49, a first temporary storage unit 50, a second temporary storage unit 51, an invalidation unit 52, and a communication unit 53. The money handling apparatus 4 further includes third storage units 54, a fourth storage unit 55, and a fifth storage unit 56.

The input unit 41 is located at an upper part of a front part of the money handling apparatus 4. The front part of the money handling apparatus 4 is on the left side of the sheet surface of FIG. 5, where the input unit 41, the depositing unit 42, and the dispensing unit 49 are located. The depositing unit 42 and the dispensing unit 49 are also located at the upper part of the front part of the money handling apparatus 4. The user can easily access the input unit 41, the depositing unit 42, and the dispensing unit 49. The depositing unit 42 and the dispensing unit 49 may be integrated with each other. That is, a part in which a banknote to be deposited is inserted may be the same as a part from which a banknote to be dispensed is discharged.

The housing of the money handling apparatus 4 is separated into an upper housing 57 and a lower housing 58. The upper housing 57 forms the upper part of the money handling apparatus 4. The lower housing 58 forms a lower part of the money handling apparatus 4.

The transport unit 43 is mainly housed in the upper housing 57. The transport unit 43 has a loop transport path 431. The transport unit 43 transports a banknote in a positive direction (counterclockwise direction on the sheet surface in FIG. 5) and a negative direction (clockwise direction on the sheet surface) along the loop transport path 431. The depositing unit 42 and the dispensing unit 49 are each connected to the loop transport path 431. The shape of the transport path is not limited to a loop.

The lower housing 58 is a safe housing. The lower housing 58 protects items stored therein more securely than the upper housing 57. The lower housing 58 includes a first storage section 581 and a second storage section 582. The first storage section 581 is located in a rear part of the money handling apparatus 4. The second storage section 582 is located in front of the first storage section 581. The first storage section 581 has a first open/close door 583. The first open/close door 583 is located at the rear side of the money handling apparatus 4, and allows the first storage section 581 to be opened toward the back (see an alternate long and short dash line in FIG. 5). The second storage section 582 has a second open/close door 584. The second open/close door 584 is located at the front side of the money handling apparatus 4, and allows the second storage section 582 to be opened toward the front (see an alternate long and short dash line in FIG. 5).

The first open/close door 583 and the second open/close door 584 are each lockable. An authority to unlock the first open/close door 583 may be the same as or different from an authority to unlock the second open/close door 584. The first storage section 581 stores banknotes to be digitized and to be invalidated, as described later. The second storage section 582 stores banknotes not to be digitized. Making the authority to unlock the first open/close door 583 different from the authority to unlock the second open/close door 584 is preferable in terms of the operation of the money handling apparatus 4 performing the digital depositing process.

The first storage unit 45 is stored in the first storage section 581. The first storage unit 45 is detachably mounted to the first storage section 581. The operator can open the first open/close door 583 from the rear side of the money handling apparatus 4, and take the first storage unit 45 out of the first storage section 581.

The first temporary storage unit 50 and the invalidation unit 52 are also stored in the first storage section 581. Both the first temporary storage unit 50 and the first storage section 581 store banknotes to be digitized. The first temporary storage unit 50 may be, for example, a reel type storage unit in which banknotes are held between tapes and are wound around a drum together with the tapes. The reel type storage unit can feed out the stored banknotes without changing the storage order of the banknotes. The invalidation unit 52 is disposed between the first temporary storage unit 50 and the first storage unit 45.

The first storage section 581 stores only banknotes to be digitized, which have been recognized by the recognition unit 44. The first temporary storage unit 50 and the first storage unit 45 are connected to the branching transport path 433. The branching transport path 433 is connected to the loop transport path 431. A diverter 434 is located at a position where the branching transport path 433 and the loop transport path 431 are connected. The diverter 434 changes the banknote transport direction. The diverter 434 sends a banknote being transported along the loop transport path 431, selectively to the branching transport path 433. In addition, the diverter 434 sends a banknote being transported along the branching transport path 433, to the loop transport path 431.

The second storage units 46 are stored in the second storage section 582. That is, the second storage units 46 are located outside the first storage section 581. The second storage units 46 store banknotes to be deposited and not to be digitized among the banknotes recognized by the recognition unit 44, as described above. Each second storage unit 46 may be, for example, a stacking type storage unit in which banknotes are stacked and stored. The second storage unit 46 can feed out the stored banknotes. The second storage unit 46 may be incapable of feeding out the stored banknotes. The money handling apparatus 4 shown in FIG. 5 includes a plurality of second storage units 46. The plurality of second storage units 46 are connected in parallel with respect to the loop transport path 431. A banknote not to be digitized is selectively stored in any of the second storage units 46.

The third storage units 54 are stored in the second storage section 582. Each third storage unit 54 may be, for example, a reel type storage unit. The third storage unit 54 can store and feed out banknotes. The third storage unit 54 may store a plurality of denominations of money in a mixed state. The money handling apparatus 4 includes a plurality of third storage units 54. The plurality of third storage units 54 may store banknotes for each denomination, for example. The plurality of third storage units 54 are connected in parallel with respect to the loop transport path 431.

The fourth storage unit 55 is stored in the second storage section 582. The fourth storage unit 55 may be, for example, a stacking type storage unit. The fourth storage unit 55 may store, for example, banknotes that are not stored in the second storage units 46. The fourth storage unit 55 may be a storage unit that is used as a temporary storage unit when, for example, a reconciliation process of checking the inventory amounts in the second storage units 46 is performed. Moreover, the fourth storage unit 55 may store banknotes to be collected among the banknotes stored in the second storage units 46. The fourth storage unit 55 is included in the category of the second storage unit because it stores the banknotes having been stored in the second storage units 46. The fourth storage unit 55 is connected to the loop transport path 431. The fourth storage unit 55 is detachably mounted to the second storage section 582. The operator can open the second open/close door 584 from the front side of the money handling apparatus 4, and take the fourth storage unit 55 out of the second storage section 582.

The fifth storage unit 56 is located in the upper housing 57. The fifth storage unit 56 may be, for example, a stacking type storage unit. The fifth storage unit 56 is connected to the loop transport path 431. The fifth storage unit 56 may store, for example, a banknote that is a counterfeit note or a note suspected to be a counterfeit note. That is, the money handling apparatus 4 stores a banknote, which has been recognized as a counterfeit note or a note suspected to be a counterfeit note by the recognition unit 44, into the fifth storage unit 56 without returning the banknote to the user. The fifth storage unit 56 may store a banknote that is found to be included in a blacklist, as described later.

The second temporary storage unit 51 is located in a rear part of the upper housing 57. The first temporary storage unit 50 and the second temporary storage unit 51 are arranged in the up-down direction in the rear part of the money handling apparatus 4. The second temporary storage unit 51 may be a reel type storage unit. The second temporary storage unit 51 temporarily stores banknotes to be deposited and not to be digitized. After the user has performed a confirmation operation, the second temporary storage unit 51 feeds out the banknotes being stored therein. The transport unit 43 transports the fed-out banknotes to, for example, the second storage unit 46.

The procedure of the digital depositing process by the money handling apparatus 4 is the same as the aforementioned procedure (see FIG. 2). As shown by arrows in FIG. 5, the depositing unit 42 sends out the banknotes to be deposited one by one into the apparatus, and the recognition unit 44 recognizes the banknotes one by one. Based on an operation signal of the user and a recognition signal of the recognition unit 44, the controller 47 outputs a control signal to the transport unit 43 so that, among the recognized banknotes, banknotes to be digitized are stored in the first storage unit 45 and banknotes not to be digitized are stored in the second storage unit 46. The transport unit 43 controls the diverter 434, based on the control signal from the controller 47. The banknotes to be digitized are directed to the first temporary storage unit 50 as shown by a solid-line arrow in FIG. 5, and the banknotes not to be digitized are directed to the second temporary storage unit 51 as shown by a broken-line arrow in FIG. 5. In this money handling apparatus 4 as well, since another diverter is not present between the recognition unit 44 and the diverter 434 in the loop transport path 431, the risk that the banknotes to be digitized and the banknotes not to be digitized are mixed up when an error occurs, is reduced. The phrase "between the recognition unit 44 and the diverter 434" refers to a section, of the loop transport path 431, which is delimited by the recognition unit 44 and the diverter 434, and to which the depositing unit 42 is not connected. The phrase "between the recognition unit 44 and the diverter 434" also refers to a section from the recognition unit 44 to the diverter 434 when a banknote sent out from the depositing unit 42 passes through the recognition unit 44 and travels toward the diverter 434.

A counting result of the banknotes taken into the apparatus is presented to the user. When the user checks the counting result and performs a confirmation operation through the input unit 11, the digital currency management server 26 performs a digitization process. In addition, the account management server 25 performs a depositing process.

Upon receiving a digitization process completion signal, the money handling apparatus 1 invalidates the banknotes stored in the first temporary storage unit 50 by using the invalidation unit 52, and stores the invalidated banknotes into the first storage unit 45. Meanwhile, the banknotes stored in the second temporary storage unit 51 are transferred to, for example, the second storage units 46.

The digital currency management server 26 has information on identification numbers related to counterfeit notes and/or information on identification numbers of stolen banknotes (so-called blacklist). When converting a physical banknote into a digital banknote based on the information transmitted from the money handling apparatus 4, the digital currency management server 26 checks whether or not the physical banknote is included in the blacklist. If the banknote is included in the blacklist, the digital currency management server 26 does not convert the banknote into a digital banknote. Since the amount of information on the blacklist is huge, it is difficult for the recognition unit 44 of the money handling apparatus 4 to check the blacklist. However, it is possible for the recognition unit 44 of the money handling apparatus 4 to have at least a part of the information on the blacklist.

Information on the banknote that was not converted into a digital banknote is provided from the digital currency management server 26 to the money handling apparatus 4 via the network 24. Based on the information provided from the digital currency management server 26, the money handling apparatus 4 does not invalidate the banknote that was not converted into a digital banknote. The transport unit 43 transports, to the fifth storage unit 56, the banknote that has been fed out from the first temporary storage unit 50 and is not invalidated, and the fifth storage unit 56 stores this banknote. The first temporary storage unit 50 enables invalidation of the banknote in the money handling apparatus 4 after the blacklist check in the digital currency management server 26. The first temporary storage unit 50 can optimize banknote management in the money handling apparatus 4.

### (Fifth embodiment)

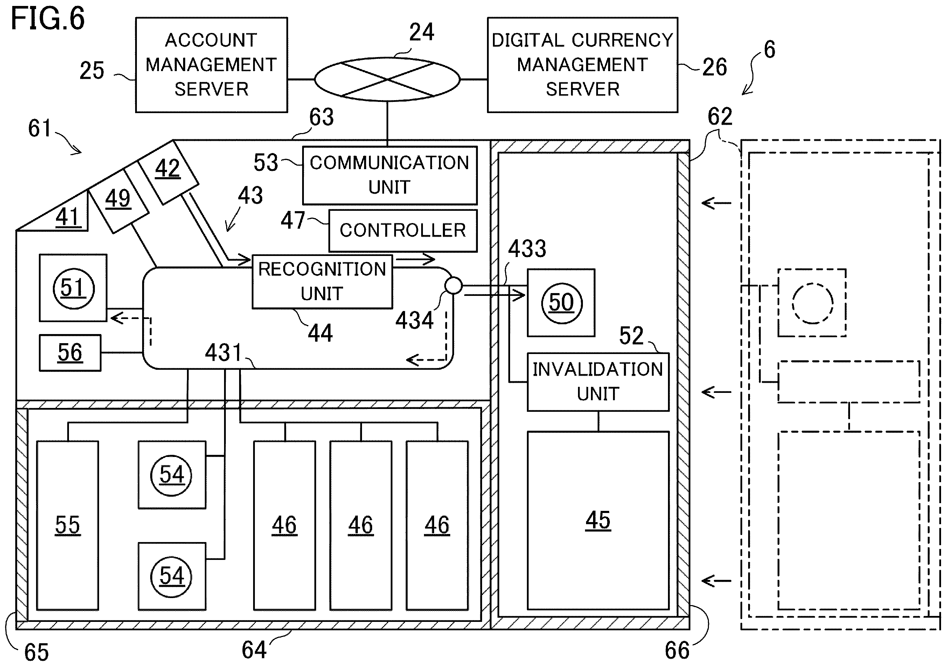

FIG. 6 illustrates a money handling apparatus 6 according to a fifth embodiment. The money handling apparatus 6 is a modification of any of the money handling apparatus 1000 shown in FIG. 9, the money handling apparatus 1 shown in FIG. 1, the money handling apparatus 3 shown in FIG. 4, and the money handling apparatus 4 shown in FIG. 5. The money handling apparatus 6 is a banknote handling apparatus that handles banknotes.

The money handling apparatus 6 includes a main body 61 and an extension assembly 62. If the money handling apparatus 6 has only the main body 61, the apparatus 6 cannot handle digital currency. However, even if the money handling apparatus 6 has only the main body 61, the apparatus 6 can perform various processes including a process of handling only physical banknotes, i.e., a normal depositing process. The extension assembly 62 is mountable to the main body 61. In the example shown in FIG. 6, the extension assembly 62 is mounted to the rear side of the main body 61. With the extension assembly 62 being mounted to the main body 61, the money handling apparatus 6 can handle digital currency. The money handling apparatus 6 with the extension assembly 62 mounted to the main body 61 can perform a digital depositing process.

The main body 61 includes an input unit 41, a depositing unit 42, a transport unit 43, a recognition unit 44, second storage units 46, a controller 47, a dispensing unit 49, a second temporary storage unit 51, a communication unit 53, third storage units 54, a fourth storage unit 55, and a fifth storage unit 56.

The main body 61 is separated into an upper housing 63 and a lower housing 64. The input unit 41, the depositing unit 42, the transport unit 43, the recognition unit 44, the controller 47, the dispensing unit 49, the second temporary storage unit 51, the communication unit 53, and the fifth storage unit 56 are housed in the upper housing 63. The second temporary storage unit 51 is located in a front part of the upper housing 63.

The lower housing 64 corresponds to the aforementioned second storage section 582. The second storage units 46, the third storage units 54, and the fourth storage unit 55 are housed in the lower housing 64. When an open/close door 65 of the lower housing 64 is opened, the lower housing 64 is opened toward the front.

The extension assembly 62 includes a first storage unit 45, a first temporary storage unit 50, and an invalidation unit 52. The housing of the extension assembly 62 corresponds to the aforementioned first storage section 581. When an open/close door 66 of the extension assembly 62 is opened, the extension assembly 62 is opened toward the back. When the extension assembly 62 is mounted to the main body 61, the branching transport path 433 in the extension assembly 62 is connected to the loop transport path 431 of the main body 61 via the diverter 434.

The operation of the money handling apparatus 6 is the same as that of the money handling apparatus 4. The controller 47 outputs a control signal to the transport unit 43 so that banknotes to be digitized are stored in the first storage unit 45 and banknotes not to be digitized are stored in the second storage unit 46. Based on the control signal from the controller 47, the transport unit 43 controls the diverter 434. The banknotes to be digitized, among the recognized banknotes, are directed to the first temporary storage unit 50 in the extension assembly 62 as shown by a solid-line arrow in FIG. 6, and the banknotes not to be digitized are directed to the second temporary storage unit 51 as shown by a broken-line arrow. In this money handling apparatus 6 as well, since another diverter is not present between the recognition unit 44 and the diverter 434 in the loop transport path 431, the risk that the banknotes to be digitized and the banknotes not to be digitized are mixed up when an error occurs, is reduced.

Then, the money handling apparatus 6 stores the banknote to be digitized into the first storage unit 45, and stores the banknotes not to be digitized into the second storage units 46, for example. The money handling apparatus 6 can manage the money to be digitized and the money not to be digitized separately from each other.

### (Sixth embodiment)

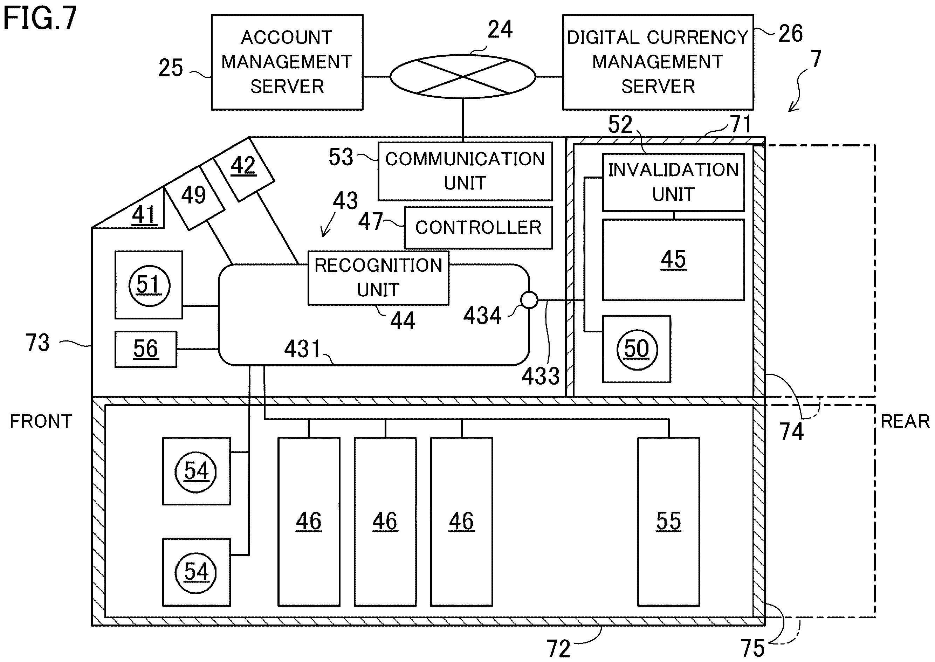

FIG. 7 illustrates a money handling apparatus 7 according to a sixth embodiment. The money handling apparatus 7 is a modification of any of the money handling apparatus 1000 shown in FIG. 9, the money handling apparatus 1 shown in FIG. 1, the money handling apparatus 3 shown in FIG. 4, the money handling apparatus 4 shown in FIG. 5, and the money handling apparatus 6 shown in FIG. 6. The money handling apparatus 7 is a banknote handling apparatus that handles banknotes.

The money handling apparatus 7 includes a first storage section 71, a second storage section 72, and an upper housing 73. Each of the first storage section 71 and the second storage section 72 is a safe housing.

The input unit 41, the depositing unit 42, the transport unit 43, the recognition unit 44, the controller 47, the dispensing unit 49, the communication unit 53, the second temporary storage unit 51, and the fifth storage unit 56 are housed in the upper housing 73.

The second storage section 72 is located below the upper housing 73. The second storage section 72 extends from the front surface to the rear surface of the money handling apparatus 7. A second open/close door 75 of the second storage section 72 allows the second storage section 72 to be opened toward the back. The second storage units 46, the third storage units 54, and the fourth storage unit 55 are stored in the second storage section 72. The fourth storage unit 55 for collection is located in a rear part of the second storage section 72.

The first storage section 71 is located at the rear side of the upper housing 73 and on the upper side of the second storage section 72. A first open/close door 74 of the first storage section 71 allows the first storage section 71 to be opened toward the back. The first storage unit 45, the first temporary storage unit 50, and the invalidation unit 52 are stored in the first storage section 71. The first temporary storage unit 50 is connected to the branching transport path 433. The branching transport path 433 is connected to the loop transport path 431. A diverter 434 is located at a position where the branching transport path 433 and the loop transport path 431 are connected.

Both the first open/close door 74 of the first storage section 71 and the second open/close door 75 of the second storage section 72 are located at the rear side of the money handling apparatus 7. The operator can access each of the first storage section 71 and the second storage section 72 from the rear side of the money handling apparatus 7. Thus, maintainability of the money handling apparatus 7 is enhanced.

The operation of the money handling apparatus 7 is the same as that of the money handling apparatus 4 or the money handling apparatus 6.

### (Seventh embodiment)

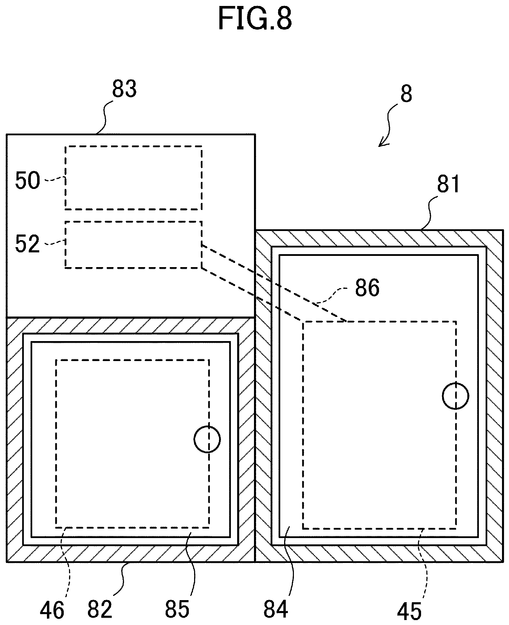

FIG. 8 illustrates a money handling apparatus 8 according to a seventh embodiment. The money handling apparatus 8 is a modification of any of the money handling apparatus 1000 shown in FIG. 9, the money handling apparatus 1 shown in FIG. 1, the money handling apparatus 3 shown in FIG. 4, the money handling apparatus 4 shown in FIG. 5, the money handling apparatus 6 shown in FIG. 6, and the money handling apparatus 7 shown in FIG. 7.

FIG. 8 illustrates the money handling apparatus 8 viewed from the rear side. The money handling apparatus 8 includes a first storage section 81, a second storage section 82, and an upper housing 83. Each of the first storage section 81 and the second storage section 82 is a safe housing. A first open/close door 84 of the first storage section 81 allows the first storage section 81 to be opened toward the back, and a second open/close door 85 of the second storage section 82 allows the second storage section 82 to be opened toward the back.

The upper housing 83 houses at least the first temporary storage unit 50 and the invalidation unit 52. The first storage section 81 stores the first storage unit 45. The second storage section 82 stores at least the second storage unit 46.

The second storage section 82 is located below the upper housing 83. The first storage section 81 is located on the side of the second storage section 82. The first storage section 81 is laterally displaced with respect to the second storage section 82 and the upper housing 83.

A chute 86 connects the invalidation unit 52 to the first storage unit 45. The chute 86 is inclined with respect to the up-down direction. Money invalidated by the invalidation unit 52 is guided diagonally downward along the chute 86 and sent to the first storage unit 45. Money stored in the first storage unit 45 is unusable money, and the first storage unit 45 does not feed out the stored money. The money handling apparatus 8 allows a layout in which the invalidation unit 52 and the first storage unit 45 are laterally shifted.

The first storage section 81 and the second storage section 82 are arranged horizontally side by side, and the first open/close door 84 and the second open/close door 85 respectively allow the first storage section 81 and the second storage section 82 to be opened toward the back, which facilitates maintenance of the money handling apparatus 8 by the operator.

## Claims

1. A money handling apparatus, comprising:
an input unit configured to output an operation signal corresponding to an operation performed by a user;
a depositing unit configured to send out money to be deposited, into the apparatus;
a transport unit having a transport path connected to the depositing unit, and configured to transport the money sent out from the depositing unit;
a recognition unit disposed on the transport path, and configured to recognize the money and output a recognition signal;
a first storage unit and a second storage unit to which the transport path is connected, and which are configured to store recognized money; and
a controller configured to output a control signal so that money to be digitized is stored in the first storage unit and money not to be digitized is stored in the second storage unit in a depositing process, based on at least the operation signal.

2. The money handling apparatus according to claim 1, further comprising an invalidation unit connected to the first storage unit, and configured to invalidate the money to be digitized, wherein
the first storage unit stores invalidated money.

3. The money handling apparatus according to claim 1 or 2, wherein the first storage unit is mountable/dismountable with respect to the apparatus.

4. The money handling apparatus according to any one of claims 1 to 3, further comprising a dispensing unit to which the transport path is connected, and which is configured to dispense, from the apparatus, money to be dispensed that has been fed out from the second storage unit in a dispensing process.

5. The money handling apparatus according to any one of claims 1 to 4, wherein
the transport unit includes a diverter located in a section, of the transport path, from the recognition unit toward the second storage unit, and a branching transport path branching off from the transport path at the diverter, and
the first storage unit is connected to the branching transport path.

6. The money handling apparatus according to claim 5, wherein the transport unit does not have another diverter in a section, of the transport path, from the recognition unit toward the diverter.

7. The money handling apparatus according to any one of claims 1 to 4, further comprising a first temporary storage unit configured to temporarily store the money to be digitized before being stored in the first storage unit.

8. The money handling apparatus according to claim 7, wherein
the transport unit includes a diverter located in a section, of the transport path, from the recognition unit toward the second storage unit, and a branching transport path branching off at the diverter, and
the first temporary storage unit and the first storage unit are connected to the branching transport path.

9. The money handling apparatus according to claim 8, further comprising a second temporary storage unit configured to temporarily store the money not to be digitized before being stored in the second storage unit.

10. The money handling apparatus according to claim 9, wherein the diverter is located in a section, of the transport path, from the recognition unit toward the second temporary storage unit.

11. The money handling apparatus according to claim 10, wherein
the depositing unit is located at a front part of the apparatus, and
the first temporary storage unit and the second temporary storage unit are located at a rear part of the apparatus.

12. The money handling apparatus according to any one of claims 1 to 11, further comprising a first storage section configured to store the first storage unit, wherein
the second storage unit is located outside the first storage section.

13. The money handling apparatus according to claim 12, further comprising a second storage section configured to store the second storage unit, wherein
the first storage section has a first open/close door that is lockable, and the second storage section has a second open/close door that is different from the first open/close door and is lockable.

14. The money handling apparatus according to any one of claims 1 to 13, wherein
the depositing unit is located at a front part of the apparatus, and
the first storage unit is located at a rear part of the apparatus and the second storage unit is located at the front part of the apparatus.

15. The money handling apparatus according to any one of claims 1 to 14, wherein
the second storage unit is housed in a main body of the apparatus, and
the first storage unit is housed in an extension assembly mounted to the main body of the apparatus.
